(19) Europäisches Patentamt
European Patent Office
Office européen des brevets

(11) EP 2 220 131 B1

(12) # EUROPEAN PATENT SPECIFICATION

(45) Date of publication and mention of the grant of the patent:
**17.07.2013 Bulletin 2013/29**

(21) Application number: **08861119.9**

(22) Date of filing: **12.12.2008**

(51) Int Cl.:
*C08F 110/06* (2006.01)

(86) International application number:
**PCT/EP2008/067445**

(87) International publication number:
**WO 2009/077460 (25.06.2009 Gazette 2009/26)**

(54) **SPUNBOND NONWOVENS MADE FROM HIGH-CRISTALLINITY PROPYLENE POLYMER**

SPINNVLIESSTOFFE AUS HOCHKRISTALLINEM PROPYLENPOLYMER

NON-TISSÉS PAR FILAGE DIRECT FAITS DE POLYMÈRE DU PROPYLÈNE À HAUTE CRISTALLINITÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.12.2007 EP 07150037**

(43) Date of publication of application:
**25.08.2010 Bulletin 2010/34**

(73) Proprietor: **TOTAL RESEARCH & TECHNOLOGY FELUY**
**7181 Seneffe (BE)**

(72) Inventors:
- **STANDAERT, Alain**
  **B-1020 Bruxelles (BE)**
- **HAUBRUGE, Hugues**
  **B-1457 Walhain (BE)**
- **PAVY, Guillaume**
  **B-1060 Bruxelles (BE)**
- **GROMADA, Jérôme**
  **B-5380 Marchovelette (BE)**

(74) Representative: **Leyder, Francis**
**Total Reseach & Technology Feluy**
**Zone Industrielle C**
**7181 Seneffe (BE)**

(56) References cited:
**EP-A- 1 712 351** **WO-A-2007/122240**
**US-A- 4 282 076** **US-A1- 2007 021 022**

- **CECCHIN G ET AL: "POLYPROPENE PRODUCT INNOVATION BY REACTOR GRANULE TECHNOLOGY" MACROMOLECULAR SYMPOSIA, WILEY VCH VERLAG, WEINHEIM, DE, no. 173, June 2001 (2001-06), pages 195-209, XP001104624 ISSN: 1022-1360**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 220 131 B1

Printed by Jouve, 75001 PARIS (FR)

## Description

### Field of the invention

The present invention relates to fibers comprising at least 98 wt% of a propylene polymer having, in particular a specific molecular weight distribution $M_w/M_n$, xylene solubles content, and polydispersity index. The present invention also relates to nonwovens, laminates and composites comprising such fibers. Furthermore, the present invention relates to a process for producing such fibers, nonwovens, laminates and composites.

### The technical problem and the prior art

Propylene polymers are amongst the most widely used polymers in fibers and nonwovens for hygiene articles, such as baby diapers, adult incontinence articles, wipes and feminine hygiene articles, and agricultural applications, to name only a few. To be used in such a wide range of application the fibers and nonwovens need to have an equally wide range of properties.

However, it is a common desire in most applications that the fibers and nonwovens have good mechanical properties, in particular that they have good mechanical strength. This requirement has gained in importance because of the continuous drive to reduce waste in volume as well as weight. In fibers and nonwovens this results in constant pressure to down gauge and lightweight while keeping the mechanical properties. Expressed differently, it means that the fibers and nonwovens need to have improved properties, in particular improved mechanical properties, when the weight of the fibers and nonwovens is kept constant.

In terms of mechanical properties of the polymer high-crystallinity propylene polymer (HCPP) seems a good candidate to improve the mechanical properties of fibers and nonwovens. However, the high level of crystallinity in a HCPP is disadvantageous when trying to thermally bond HCPP-fibers because it requires higher energy input to achieve a sufficient level of thermal bonding. Thus, nonwovens produced from HCPP-fibers do not live up to expectations.

A possibility to overcome the lack of bonding properties of fibers made from pure HCPP might be blending the HCPP with another polymer that enhance the bonding properties. However, blending adds complexity and costs to the fiber and nonwoven production process and in consequence is not a preferred route.

There is therefore a need in the industry to provide propylene polymer fibers and nonwovens having improved properties, particularly having improved mechanical properties.

It is therefore an object of the present invention to provide propylene polymer fibers and nonwovens having improved properties.

In particular, it is an object of the present invention to provide propylene polymer fibers and nonwovens having improved mechanical properties.

It is therefore also an object of the present invention to provide fibers that have good bonding properties.

Further, it is an object of the present invention to provide fibers that can be produced easily.

### Brief description of the invention

We have now discovered that at least one of the above objectives can be met with the fibers of the present invention, which are made from a propylene polymer having, in particular, a specific molecular weight distribution $M_w/M_n$, xylene solubles content, and polydispersity index.

The present invention therefore provides fibers comprising at least 98.0 wt% of a propylene polymer, said propylene polymer having melt flow index in the range from 5 dg/min to 2000 dg/min (measured according to ISO 1133, condition L, 2.16 kg, 230°C), a molecular weight distribution $M_w/M_n$ of at least 4.0 and a xylene solubles content of at most 3.0 wt% relative to the total weight of said propylene polymer.

Additionally, the present invention provides nonwovens, laminates and composites comprising such fibers.

The present invention also provides a process for the production of fibers comprising the steps of

(a) polymerizing propylene and one or more optional comonomers in presence of a Ziegler-Natta polymerization catalyst to produce a propylene polymer,
(b) melting the propylene polymer obtained in step (a) in an extruder to obtain a molten propylene polymer, and
(c) extruding said molten propylene polymer from a number of fine, usually circular, capillaries of a spinneret to form fibers,

wherein the propylene polymer obtained in step (a) has a molecular weight distribution $M_w/M_n$ of at least 4.0 and a xylene solubles content of at most 3.0 wt% relative to the total weight of said propylene polymer, and polydispersity index in the range from 5 to 7.

Furthermore, the present invention provides a process for the production of nonwovens, laminates and composites comprising the fibers of the present invention.

**Detailed description of the invention**

For the purposes of the present application the terms "fiber" and "filament" are used synonymously.

For easier understanding the terms "diether catalyst", "succinate catalyst" and "phthalate catalyst" are used to denote a Ziegler-Natta catalyst with a diether compound as internal electron donor, resp. a Ziegler-Natta catalyst with a succinate compound as internal electron donor, resp. a Ziegler-Natta catalyst with a phthalate compound as internal donor.

For the purposes of the present invention the terms "propylene polymer" and "polypropylene" may be used interchangeably.

The fibers of the present invention comprise at least 98.0 wt% of propylene polymer, relative to the total weight of the fibers. Preferably, the fibers comprise at least 98.5 wt%, more preferably at least 99.0 wt%, even more preferably at least 99.5 wt%, and most preferably at least 99.8 wt% of propylene polymer, relative to the total weight of the fibers.

The propylene polymer used in the present invention has a melt flow index in the range from 5 dg/min to 2000 dg/min as measured according to ISO 1133, condition L, with a load of 2.16 kg at 230°C. When used for fiber spinning the melt flow index of the propylene polymer is in the range from 5 dg/min to 40 dg/min. When used in the spunbonding process the melt flow index of the propylene polymer is at least 10 dg/min, preferably at least 15 dg/min, and most preferably at least 20 dg/min. When used in the spunbonding process the melt flow index of the propylene polymer is at most 300 dg/min, preferably at most 200 dg/min, more preferably at most 150 dg/min, even more preferably at most 100 dg/min and most preferably at most 60 dg/min. When used in the melt blown process the melt flow index of the propylene polymer is at least 100 dg/min, preferably at least 150 dg/min, more preferably at least 200 dg/min, even more preferably at least 250 dg/min and most preferably at least 300 dg/min. When used in the melt blown process the melt flow index of the propylene polymer is at most 2000 dg/min, preferably at most 1800 dg/min, more preferably at most 1600 dg/min and most preferably at most 1400 dg/min.

The propylene polymer used in the present invention has a molecular weight distribution $M_w/M_n$ of at least 4.0. Preferably, the molecular weight distribution $M_w/M_n$ is at least 4.5, and most preferably it is at least 5.0. Molecular weights and thus the molecular weight distribution can be determined by size exclusion chromatography (SEC) as is described in more detail in the examples.

The propylene polymer used in the present invention is further characterized by a xylene solubles content of at most 3.0 wt%, relative to the total weight of the propylene polymer. Preferably, the xylene solubles content is at most 2.5 wt%, more preferably it is at most 2.4 wt%, 2.3 wt%, 2.2 % or 2.1 wt%, even more preferably it is at most 2.0 wt% or 1.9 wt% and most preferably it is at most 1.8 wt%, relative to the total weight of the propylene polymer. The xylene solubles content is determined by dissolving the propylene polymer in refluxing xylene, cooling the solution to 25°C, filtering the solution, and subsequently evaporating the solvent. The residue, which is the xylene soluble fraction of the propylene polymer, is then dried and weighed.

Preferably, the propylene polymer used in the present invention is characterized by high isotacticity, for which the content of mmmm pentads is a measure. The content of mmmm pentads is at least 97.0 %, preferably at least 97.5 % and most preferably at least 98.0 %. The isotacticity, i.e. the content of mmmm pentads is determined by NMR analysis according to the method described by G.J. Ray et al. in Macromolecules, vol. 10, n°4, 1977, p. 773-778.

Preferably, the propylene polymers used in the present invention are homopolymers or random copolymers of propylene and one or more comonomers. Said one of more comonomers can be ethylene or a $C_4$-$C_{20}$ alpha-olefin, such as 1-butene, 1-pentene, 4-methyl-1-pentene, 1-hexene, 1-octene.

The random copolymers useful in the present invention comprise at least 0.1 wt%, preferably at least 0.2 wt%, and most preferably at least 0.5 wt% of comonomer(s). They comprise at most 2 wt% of comonomer(s). Preferably, the random copolymers are copolymers of propylene and ethylene.

It is most preferred that the propylene polymer used in the present invention is a homopolymer.

When used for fiber spinning, in the spunbonding process or the melt blown process, it is preferred that the propylene polymer used in the present invention has been chemically or thermally degraded from a first melt flow index $MFI_1$, as recovered from the polymerization process, to a second melt flow index $MFI_2$. Preferably, the propylene polymer is chemically degraded (visbroken). For chemical degradation the propylene polymer is brought into intimate contact with a peroxide (e.g. 2,5-dimethylhexane-2,5-di-tertbutylperoxide) at an elevated temperature, thus leading to the generation of radicals which in turn lead to a breakdown of the polymer chains. In consequence, the melt flow index of the propylene polymer increases. Without wishing to be bound by theory it is thought that the radicals preferentially attack the longer polymer chains for statistical reasons, the molecular weight distribution narrows. Visbreaking of propylene polymers is usually carried out at temperatures in the range from 200°C to 250°C. It can for example be done in the extruder in the granulation step of a propylene polymer manufacturing plant.

The extent to which a propylene polymer has been degraded can be described by the degradation ratio $MFI_1/MFI_2$, which is the ratio between the first melt flow index $MFI_1$ before degradation and the second melt flow index $MFI_2$ after degradation. The melt flow index is determined according to ISO 1133, condition L, at 230°C and 2.16 kg. The propylene polymer of the present invention preferably has a degradation ratio of at least 0.02, more preferably of at least 0.05, and most preferably of at least 0.10. Preferably it has a degradation ratio of at most 0.90, more preferably of at most 0.80, 0.70 or 0.60, and most preferably of at most 0.50.

If the propylene polymer is to be chemically or thermally degraded, it is preferred that the propylene polymer before degradation has a bimodal or a broad molecular weight distribution. A propylene polymer having a bimodal molecular weight distribution comprises at least two propylene polymer fractions having different melt flow indices with each propylene polymer fraction being produced in a different polymerization reactor.

Preferably, the propylene polymers produced according to the present invention are characterized by a polydispersity index (PI) in the range from 5 to 7. The polydispersity index (PI) has first been described by Zeichner and Patel in the Proceedings of the 2nd World Congress of Chemical Engineering, Montreal, Canada, 6, 373 (1981). The polydispersity index (PI) is defined as

$$PI = 10^5\ Pa \cdot G_c^{-1} \qquad \text{(eq. 1)}$$

with $G_c$, which is expressed in Pa, being the modulus at the intersection of the storage modulus G' and loss modulus G", i.e. $G_c$ is the modulus when G' = G". In the literature this intersection is often called "the cross-over point". Storage modulus G' and loss modulus G" can be obtained for a molten polymer sample from dynamic rheology measurement.

The propylene polymer used in the present invention can be produced in a slurry, bulk or gas phase process. In a slurry process the polymerization is carried out in an inert diluent, such as an inert hydrocarbon. In a bulk process the polymerization is carried out in liquid propylene as reactor medium. And in a gas phase process the polymerization is carried out in the gaseous phase.

The propylene polymer used in the present invention is produced by polymerizing propylene and one or more optional comonomers in the presence of a Ziegler-Natta catalyst system, which is well known to the skilled person. A Ziegler-Natta catalyst system comprises a titanium compound having at least one titanium-halogen bond and an internal electron donor, both on a suitable support (for example on a magnesium halide in active form), an organoaluminium compound (such as an aluminium trialkyl), and an optional external donor (such as a silane or a diether compound).

The internal donor used in the present invention is selected from the group consisting of diether compounds, succinate compounds, phthalate compounds, di-ketone compounds, enamino-imine compounds and any blend of these. A mixture of internal donors can for example comprise a succinate and a phthalate or a succinate and a diether. Diether compounds are most preferred as internal donor.

Alternatively to a Ziegler-Natta catalyst comprising a mixture of internal donors as described above it is also possible to employ any mixture of Ziegler-Natta catalysts, whereby the Ziegler-Natta catalyst is selected from the group consisting of diether catalysts, succinate catalysts, phthalate catalysts, catalysts comprising a di-ketone compound as internal donor and catalysts comprising an enamino-imine as internal donor.

Independently of whether one Ziegler-Natta catalyst with a mixture of internal donors or a mixture of Ziegler-Natta catalysts, each with a different electron donor, is used, the internal donors selected from the group consisting of diethers, succinates, phthalates, di-ketones or enamino-imines comprise at least 80 wt%, preferably at least 90 wt%, more preferably at least 95 wt%, even more preferably at least 99 wt% of the total weight of the internal donor. It is, however, most preferred that the internal donor is a diether, succinate, phthalate, an enamino-imine or a di-ketone. It is more preferred that the internal donor essentially consists of a diether or a succinate. It is most preferred that the internal donor essentially consists of a diether. The term "essentially" is used to denote that the internal donor may contain a minor amount of impurities, for example impurities originating from the production of the internal donor. Preferably the amount of impurities is up to 0.5 wt%, preferably up to 0.3 wt% and most preferably up to 0.1 wt%, relative to the total weight of the internal donor.

Ziegler-Natta catalysts comprising a diether, a succinate, a phthalate, a di-ketone or an enamino-imine as internal donor can for example be obtained by reaction of an anhydrous magnesium halide with an alcohol, followed by titanation with a titanium halide and reaction with the respective diether, succinate, phthalate, di-ketone or enamino-imine compound as internal donor. Such a catalyst comprises about 1 - 6 wt% of titanium, about 10 - 20 wt% of magnesium and about 5 - 30 wt% of internal donor with chlorine and solvent making up the remainder.

Particularly suited as internal donors are 1,3-diethers of formula

$$R^1R^2C(CH_2OR^3)(CH_2OR^4)$$

wherein $R^1$ and $R^2$ are the same or different and are $C_1$-$C_{18}$ alkyl, $C_3$-$C_{18}$ cycloalkyl or $C_7$-$C_{18}$ aryl radicals; $R^3$ and $R^4$ are the same or different and are $C_1$-$C_4$ alkyl radicals; or are the 1,3-diethers in which the carbon atom in position 2 belongs to a cyclic or polycyclic structure made up of 5, 6 or 7 carbon atoms and containing two or three unsaturations. Ethers of this type are disclosed in published European patent applications EP-A-0 361 493 and EP-A-0 728 769. Representative examples of said diethers are 2-methyl-2-isopropyl-1,3-dimethoxypropane; 2,2-diisobutyl-1,3-dimethoxypropane; 2-isopropyl-2-cyclopentyl-1,3-dimethoxypropane; 2-isopropyl-2-isoamyl-1,3-dimethoxypropane; 9,9-bis (methoxymethyl)fluorene.

Suitable succinate compounds have the formula

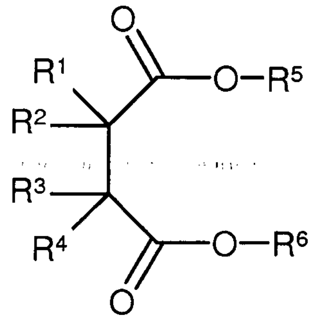

wherein $R^1$ to $R^4$ are equal to or different from one another and are hydrogen, or a $C_1$-$C_{20}$ linear or branched alkyl, alkenyl, cycloalkyl, aryl, arylalkyl or alkylaryl group, optionally containing heteroatoms, and $R^1$ to $R^4$, being joined to the same carbon atom, can be linked together to form a cycle; and $R^5$ and $R^6$ are equal to or different from one another and are a linear or branched alkyl, alkenyl, cycloalkyl, aryl, arylalkyl or alkylaryl group, optionally containing heteroatoms.

Suitable phthalates are selected from the alkyl, cycloalkyl and aryl phthalates, such as for example diethyl phthalate, diisobutyl phthalate, di-n-butyl phthalate, dioctyl phthalate, diphenyl phthalate and benzylbutyl phthalate.

Suitable di-ketones are 1,3-di-ketones of formula

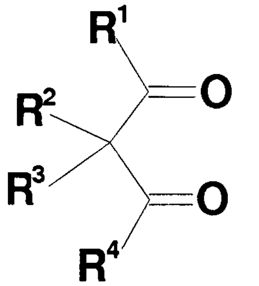

wherein $R^2$ and $R^3$ are equal to or different from one another and are hydrogen, or a C1-C20 linear or branched alkyl, alkenyl, cycloalkyl, aryl, arylalkyl or alkylaryl group, optionally containing heteroatoms, and $R^2$ and $R^3$, being joined to the same carbon atom, can be linked together to form a cycle; and $R^1$ and $R^4$ are equal to or different from one another and are a linear or branched alkyl, alkenyl, cycloalkyl, aryl, arylalkyl or alkylaryl group, optionally containing heteroatoms.

Suitable enamino-imines have the general formula

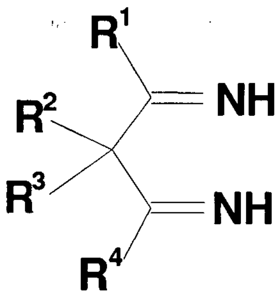

wherein $R^2$ and $R^3$ are equal to or different from one another and are hydrogen, or a C1-C20 linear or branched alkyl,

alkenyl, cycloalkyl, aryl, arylalkyl or alkylaryl group, optionally containing heteroatoms, and $R^2$ and $R^3$, being joined to the same carbon atom, can be linked together to form a cycle; and $R^1$ and $R^4$ are equal to or different from one another and are a linear or branched alkyl, alkenyl, cycloalkyl, aryl, arylalkyl or alkylaryl group, optionally containing heteroatoms.

Ziegler-Natta catalysts comprising a succinate, a diether, or a phthalate as internal donor are commercially available for example from Basell under the Avant ZN trade name.

In the polymerization process of the present invention the external electron donor (ED) is optional. It is nevertheless preferred to perform the polymerization in presence of an external electron donor (ED). Suitable external electron donors (ED) include certain silanes, ethers, esters, amines, ketones, heterocyclic compounds and blends of these. It is preferred to use a 1,3-diether as described above or a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si($OCH_3$)$_2$, (cyclohexyl)(methyl) Si($OCH_3$)$_2$ (referred to as "C donor"), (phenyl)$_2$Si($OCH_3$)$_2$ and (cyclopentyl)$_2$ Si($OCH_3$)$_2$ (referred to as "D donor").

The organoaluminium compound used in the process of the present invention is triethyl aluminium (TEAL). Advantageously, the triethyl aluminium has a hydride content, expressed as $AlH_3$, of less than 1.0 wt% with respect to the triethyl aluminium. More preferably, the hydride content is less than 0.5 wt%, and most preferably the hydride content is less than 0.1 wt%. It would not depart from the scope of the invention if the organoaluminium compound contains minor amounts of other compounds of the trialkylaluminium family, such as triisobutyl aluminium, tri-n-butyl aluminium, and linear or cyclic alkyl aluminium compounds containing two or more Al atoms, provided they show polymerization behavior comparable to that of TEAL.

In the process of the present invention the molar ratio Al/Ti is at most 1000. Preferably, it is at most 400, 300 or 200. More preferably it is at most 100. Even more preferably it is at most 50 or 40 or 35. Most preferably it is at most 30. Preferably the molar ratio Al/Ti is at least 10, most preferably at least 15.

If an external electron donor (ED) is present, the molar ratio Al/ED is at most 1000. Preferably it is at most 500. More preferably it is at most 250 or 200. Even more preferably it is at most 120. Most preferably it is at most 80. Preferably the molar ratio Al/ED is at least 5.

Before being fed to the polymerization reactor the catalytic system preferably undergoes a premix and/or a pre-polymerization step. In the premix step, the triethyl aluminium (TEAL) and the external electron donor (ED) - if present -, which have been pre-contacted, are mixed with the Ziegler-Natta catalyst at a temperature in the range from 0°C to 30°C, preferably in the range from 5°C to 20°C, for up to 15 min. The mixture of TEAL, external electron donor and Ziegler-Natta catalyst is pre-polymerized with propylene at a temperature in the range from 10°C to 100°C, preferably in the range from 10°C to 30°C, for 1 to 30 min, preferably for 2 to 20 min.

The polymerization of propylene and one or more optional comonomers can be carried out according to known techniques. The polymerization can for example be carried out in liquid propylene as reaction medium. It can also be carried out in a diluent, such as a hydrocarbon that is inert under polymerization conditions (slurry polymerization). It can also be carried out in the gas phase.

For the present invention propylene homopolymers and random copolymers are preferably produced by polymerization in liquid propylene at temperatures in the range from 20°C to 100°C. Preferably, temperatures are in the range from 60°C to 80°C. The pressure can be atmospheric or higher. Preferably the pressure is between 25 and 50 bar.

Hydrogen is used to control the chain lengths of the propylene polymers. For the production of propylene polymers with higher MFI, i.e. with lower average molecular weight and shorter polymer chains, the concentration of hydrogen in the polymerization medium needs to be increased. Inversely, the hydrogen concentration in the polymerization medium has to be reduced in order to produce propylene polymers with lower MFI, i.e. with higher average molecular weight and longer polymer chains.

For the present invention the production of the propylene polymers can be carried out in one single polymerization reactor, which with the polymerization catalysts used in the present invention leads to a broader molecular weight distribution.

Alternatively, the production of the propylene polymers can be carried out in two or more sequential polymerization reactors, i.e. two or more polymerization reactors in series, wherein the propylene polymer produced in each of the two or more sequential polymerization reactors has a different average molecular weight. In practice, the production of propylene polymers having different average molecular weight may be achieved by having different hydrogen concentrations in the polymerization media in each of the at least two polymerization reactors.

It is clear to the person skilled in the art that the production of the propylene polymers can be done for example in three, four or five sequential polymerization reactors. However, if more than one reactor is used, it is preferred that

the production of propylene polymers is done in two sequential polymerization reactors, for which case it is preferred that the contribution of the first polymerization reactor is in the range from 35 wt% to 80 wt%, preferably from 35 wt% to 65 wt%, of the total weight of the propylene polymer. In the case of three sequential polymerization reactors it is preferred to have two sequential loop polymerization reactors followed by a gas-phase polymerization reactor.

Propylene, one or more optional comonomers and hydrogen are fed to the polymerization reactor or to each polymerization reactor if two or more polymerization reactors are used. When using two or more sequential polymerization reactors hydrogen is fed to the reactors at different hydrogen to propylene ratios, thus resulting in a different hydrogen concentration in each polymerization reactor. This again, in each reactor leads to the production of a propylene polymer fraction having a different molecular weight. In this way, the molecular weight distribution (MWD) of the propylene polymer recovered from the last polymerization reactor is modified. Polymerization catalyst, triethyl aluminium (TEAL) and the optional external electron donor (ED), all of which may optionally have been premixed and/or pre-polymerized, are fed to the first of the sequential polymerization reactors only.

When two or more polymerization reactors are used sequentially the polymerization medium comprising the propylene polymer is withdrawn from the polymerization reactor using suitable means for withdrawal and is fed to the subsequent polymerization reactor. From the last of the sequential polymerization reactors, the propylene polymer is recovered without any washing as a powder and is optionally converted to pellets.

The propylene polymers used in the present invention may contain additives such as, by way of example, antioxidants, light stabilizers, acid scavengers, lubricants, antistatic additives, nucleating/clarifying agents, colorants. An overview of such additives may be found in Plastics Additives Handbook, ed. H. Zweifel, 5th edition, 2001, Hanser Publishers.

PROPYLENE POLYMER WITH LOW ASH CONTENT

Preferably, the propylene polymer used in the present invention has a low ash content. Such a low ash content propylene polymer can be produced by polymerization of propylene and one or more optional comonomers in presence of a Ziegler-Natta catalyst comprising a diether as internal donor, as described in the following.

For the production of the propylene polymer with low ash content the internal donor is a diether as defined previously in the present application or a blend of a diether and one or more internal donors different from diether, provided that such a mixture shows polymerization behavior comparable to a Ziegler-Natta catalyst with only diether as internal donor. A mixture of internal donors could for example comprise a diether and a phthalate, or a diether and a succinate.

Alternatively to a Ziegler-Natta catalyst comprising a mixture of internal donors as described above it is also possible to employ a mixture of a diether catalyst and one or more Ziegler-Natta catalysts comprising an internal donor other than diether, provided that such a mixture shows a polymerization behavior that is comparable to that of a pure diether catalyst. For example, it is possible to employ a mixture of a diether catalyst and a phthalate catalyst or a mixture of a diether catalyst and a succinate catalyst.

Independently of whether one Ziegler-Natta catalyst with a mixture of internal donors or a mixture of Ziegler-Natta catalysts, each with a different electron donor, is used, the diether comprises at least 80 wt%, preferably at least 90 wt%, more preferably at least 95 wt%, and even more preferably at least 99 wt% of the total weight of the electron donors. It is most preferred that the internal donor essentially consists of a diether.

Ziegler-Natta catalysts comprising a diether as internal donor are well known in the art and can for example be obtained by reaction of an anhydrous magnesium halide with an alcohol, followed by titanation with a titanium halide and reaction with a diether compound as internal donor. Such a catalyst comprises about 2 - 6 wt% of titanium, about 10 - 20 wt% of magnesium and about 5 - 30 wt% of internal donor with chlorine and solvent making up the remainder.

In the process for the production of the low ash propylene polymer of the present invention the molar ratio Al/Ti is at most 40, preferably it is in the range from 10 to 40, and more preferably it is in the range from 15 to 35.

If an external electron donor (ED) is present, it is preferred that the molar ratio Al/ED is at most 120, more preferably it is in the range from 5 to 120, and most preferably in the range from 5 to 80.

For the production of the low ash propylene polymer of the present invention it is essential that the production of the propylene polymers is done in at least two sequential polymerization reactors, i.e. at least two polymerization reactors in series, wherein the propylene polymer fractions produced in the at least two of the sequential polymerization reactors differ in average molecular weight and melt flow index. The ratio of the melt flow indices of the propylene polymer fractions with the highest and the lowest melt flow index is at least 10. The resulting propylene polymer is therefore characterized by a broader molecular weight distribution (MWD) or higher polydispersity index (PI).

It is clear to the person skilled in the art that the production of the propylene polymers can be done for example in three, four or five sequential polymerization reactors. However, it is preferred that the production of propylene polymers is done in two or three sequential polymerization reactors, for which case it is preferred that the contribution of the first polymerization reactor is in the range from 35 wt% to 65wt% of the total weight of the propylene polymer. In the case of

three sequential polymerization reactors it is preferred to have two sequential loop polymerization reactors followed by a gas-phase polymerization reactor.

The low ash propylene polymers produced according to the present invention are characterized by a polydispersity index (PI) in the range from 5 to 7. The polydispersity index (PI) has first been described by Zeichner and Patel in the Proceedings of the 2nd World Congress of Chemical Engineering, Montreal, Canada, 6, 373 (1981). The polydispersity index (PI) is defined as

$$PI = 10^5 \, Pa \cdot G_c^{-1} \qquad \text{(eq. 1)}$$

with $G_c$, which is expressed in Pa, being the modulus at the intersection of the storage modulus G' and loss modulus G", i.e. $G_c$ is the modulus when G' = G". In the literature this intersection is often called "the cross-over point". Storage modulus G' and loss modulus G" can be obtained for a molten polymer sample from dynamic rheology measurement.

Propylene, one or more optional comonomers and hydrogen are fed to each polymerization reactor. In order to obtain a propylene polymer having the necessary polydispersity index, the hydrogen to propylene feeding ratios to the reactors are adjusted. Polymerization catalyst, triethyl aluminium (TEAL) and the optional external electron donor (ED), all of which may optionally have been premixed and/or pre-polymerized, are fed to the first of the sequential polymerization reactors only

Polymerization medium comprising the propylene polymer is withdrawn from the polymerization reactor using suitable means for withdrawal and is fed to the subsequent polymerization reactor. From the last of the sequential polymerization reactors, the propylene polymer is recovered without any washing as a powder and is optionally converted to pellets.

For the production of the low ash propylene polymer of the present invention the residence time in each polymerization reactor is at most 2 hours, more preferably at most 1.5 hours, and most preferably at most 1.25 hours. The residence time in the polymerization reactor is at least 0.25 hours, preferably at least 0.5 hours, and most preferably at least 0.75 hours.

For the production of the low ash propylene polymer of the present invention the productivity of the polymerization catalyst is equal to or higher than 30 kg of propylene polymer per g catalyst. Preferably, it is higher than 35 kg, more preferably higher than 40 kg, even more preferably higher than 45 kg of propylene polymer per g catalyst.

The low ash propylene polymers of the present invention are characterized by a low titanium content in combination with a low aluminium content.

The titanium content of the low ash propylene polymers of the present invention is at most 2 ppm, preferably at most 1.5 ppm, more preferably at most 1.25 ppm and most preferably at most 1 ppm.

The low ash propylene polymers of the present invention comprise at most 30 ppm of aluminium, preferably at most 25 ppm, more preferably at most 20 ppm, even more preferably at most 15 ppm, and most preferably at most 10 ppm.

The low ash propylene polymers of the present invention comprise at most 15 ppm of chlorine, more preferably at most 12 ppm and most preferably at most 10 ppm.

The low ash propylene polymers of the present invention comprise at most 5 ppm of magnesium, more preferably at most 4 ppm and most preferably at most 3 ppm.

The low ash propylene polymers of the present invention comprise a total ash content of at most 50 ppm, preferably of at most 45 ppm, more preferably of at most 40 ppm, and most preferably of at most 35 ppm.

The low ash propylene polymers of the present invention are characterized by a very low xylene solubles content of at most 2.5 wt% of the total propylene polymer, preferably of at most 2.4, 2.3, 2.2 or 2.1 wt% and most preferably of at most 2.0 wt%.

It has been surprisingly found that the propylene polymers of the present invention are characterized by good processability and good mechanical properties of the final articles, such as fibers and nonwovens.

FIBERS AND NONWOVENS

The polypropylene fibers and filaments of the present invention are produced by methods well known to the skilled person. Thus, the process for the production of the fibers of the present invention comprises the steps of

(a) polymerizing propylene and one or more optional comonomers in presence of a Ziegler-Natta polymerization catalyst to produce a propylene polymer,
(b) melting the propylene polymer obtained in step (a) in an extruder to obtain a molten propylene polymer, and
(c) extruding said molten propylene polymer from a number of fine, usually circular, capillaries of a spinneret to form

fibers,

wherein the propylene polymer obtained in step (a) has a molecular weight distribution $M_w/M_n$ of at least 4.0 and a xylene solubles content of at most 3.0 wt% relative to the total weight of said propylene polymer.

Preferably, step (a) of the process for the production of the fibers of the present invention further comprises

(a-1) chemically or thermally degrading the propylene polymer of step (a), which has a first melt flow index $MFI_1$, to a second melt flow index $MFI_2$.

Polypropylene is melted in an extruder, in general passed through a melt pump to ensure a constant feeding rate and then extruded through a number of fine capillaries of a spinneret. The still molten fibers and filaments are simultaneously cooled by air, drawn to an intermediate diameter and collected. They are for example collected on a winder or other suitable collecting means. Optionally, they may be drawn to a final diameter, i.e. the process for the production of the fibers of the present invention further comprises the step of

(d) rapidly reducing the intermediate diameter of the fibers obtained in step (c) to a final diameter.

The nonwovens of the present invention may be produced by any suitable method. Such methods include thermal bonding of staple fibers, the spunbonding process and the melt blown process. The preferred methods are the spunbonding process and the melt blown process. Of these the spunbonding process is the most preferred.

For the production of nonwovens the process further comprises the steps of

(e) collecting the fibers obtained in step (c) or step (d) on a support, and
(f) subsequently bonding the collected fibers to form a bonded nonwoven.

For the production of thermally bonded nonwovens the fibers of the present invention are cut into staple fibers having a length in the range from 5 to 30 mm. Said staple fibers are then carded, i.e. collected as a more or less continuous non-consolidated web on a support. In a final step the non-consolidated web is consolidated by thermal or chemical bonding, with thermal bonding being preferred.

In the spunbonding process polypropylene is melted in an extruder, in general first passed through a melt pump to ensure a constant feeding rate and then extruded from a number of fine, usually circular, capillaries of a spinneret, thus obtaining filaments. The filament formation can either be done by using one single spinneret with a large number of holes, generally several thousand, or by using several smaller spinnerets with a correspondingly lower number of holes per spinneret. After exiting from the spinneret, the still molten filaments are quenched by a current of air. The diameter of the filaments is then quickly reduced by a flow of high-pressure air. Air velocities in this drawdown step can range up to several thousand meters per minute.

After drawdown the filaments are collected on a support, for example a forming wire or a porous forming belt, thus first forming an unbonded web, which is then passed through compaction rolls and finally through a bonding step. Bonding of the fabric may be accomplished by thermobonding, hydroentanglement, needle punching, or chemical bonding.

In the melt blown process the polypropylene is melted in an extruder, in general first passed through a melt pump to ensure a constant feeding rate and then through the capillaries of a special melt blowing die. Usually melt blown dies have a single line of usually circular capillaries through which the molten polymer passes. After exiting from the die, the still molten filaments are contacted with hot air at high speed, which rapidly draws the fibers and, in combination with cool air, solidifies the filaments. In the following, the nonwoven is formed by depositing the filaments directly onto a forming wire or a porous forming belt.

The fibers and filaments of the present invention may be multicomponent fibers. Preferably they are bicomponent fibers or filaments. Bi- or multi-component fibers or filaments are known in many different configurations, such as for example side-by-side, sheath-core, islands-in-the-sea, pie or stripe configurations. Bi- or multi-component fibers or filaments can be formed by coextrusion of at least two different components into one fiber or filament. This is done by feeding the different components to a corresponding number of extruders and combining the different melts into a single fiber or filament. The resulting fiber or filament has at least two different essentially continuous polymer phases. Such fibers or filaments, their production as well as their forming a nonwoven are well known to the skilled person and are for example described in F. Fourné, Synthetische Fasern, Carl Hanser Verlag, 1995, chapter 5.2 or in B.C. Goswami et al., Textile Yarns, John Wiley & Sons, 1977, p. 371 - 376.

Composites may be formed from two or more nonwovens, of which at least one is made in accordance with the present invention. In particular, the composites comprise a spunbond nonwoven layer (S) according to the present invention or a melt blown nonwoven layer (M) according to the present invention. Composites in accordance with the

present invention can for example be SS, SSS, SMS, SMMSS or any other combination of spunbond and melt blown nonwoven layers.

A first nonwoven or composite, said first nonwoven or composite being in accordance with the present invention, and a film may be combined to form a laminate. The film preferably is a polyolefin film. The laminate is formed by bringing the first nonwoven or composite and the film together and laminating them to one another for example by passing them through a pair of lamination rolls. The laminates may further include a second nonwoven or composite, which can be but need not be according to the present invention, on the face of the film opposite to that of the first nonwoven or composite. In a preferred embodiment, the film of the laminate is a breathable polyolefin film, thus resulting in a laminate with breathable properties.

The polypropylene fibers and filaments of the present invention can be used in carpets, woven textiles, and nonwovens.

The polypropylene spunbond nonwovens of the present invention as well as composites or laminates comprising it can be used for hygiene and sanitary products, such as for example diapers, feminine hygiene products and incontinence products, products for construction and agricultural applications, medical drapes and gowns, protective wear, lab coats etc.

The polypropylene meltblown nonwovens of the present invention can be used in hygiene, filtration and absorption applications, such as diapers, feminine hygiene products, incontinence products, wraps, gowns, masks, filters, absorption pads. Frequently polypropylene meltblown nonwovens are used in combination with other nonwovens, such as for example spunbond nonwoven to form composites, which in turn may be used in the cited applications.

**Examples**

TEST METHODS

Melt flow index is determined according to ISO 1133, condition L, at 230°C and 2.16 kg.

Molecular weights are determined by Size Exclusion Chromatography (SEC) at high temperature (145°C). A 10 mg PP sample of pellets is dissolved at 160°C in 10 ml of TCB (technical grade) for 1 hour. The analytical conditions for the Alliance GPCV 2000 from WATERS are :

- Volume: +/- 400μl
- Injector temperature: 140°C
- Column and detector: 1 45 °C
- Column set: 2 Shodex AT-806MS and 1 Styragel HT6E
- Flow rate: 1 ml/min
- Detector: Refractive index
- Calibration: Narrow standards of polystyrene
- Calculation: Based on Mark-Houwink relation ($\log(M_{PP}) = \log(M_{PS}) - 0.25323$)

Xylene solubles (XS) were determined as follows: Between 4.5 and 5.5 g of propylene polymer were weighed into a flask and 300 ml xylene were added. The xylene was heated under stirring to reflux for 45 minutes. Stirring was continued for 15 minutes exactly without heating. The flask was then placed in a thermostated bath set to 25°C +/- 1 °C for 1 hour. The solution was filtered through Whatman n° 4 filter paper and exactly 100 ml of solvent were collected. The solvent was then evaporated and the residue dried and weighed. The percentage of xylene solubles ("XS"), i.e. the weight percentage of the xylene soluble fraction, was then calculated according to

$$\text{XS (in wt\%)} = (\text{Weight of the residue / Initial total weight of PP}) * 300$$

with all weights being in the same unit, such as for example in grams.

The isotacticity (% mmmm) is determined by NMR analysis according to the method described by G.J. Ray et al. in Macromolecules, vol. 10, n°4, 1977, p. 773-778. It is performed on the dried product resulting of the extraction by boiling heptane of the xylene insoluble PP fraction. For this, the xylene insoluble fraction as obtained above is ground up into small bits, of which 2 g are weighed into a Soxhlet cartridge. The extraction is then performed in a Soxhlet apparatus for 15 hours with heptane as solvent. The heptane insoluble fraction is recovered from the Soxhlet cartridge and dried in air for a minimum of 4 days.

Said heptane insoluble fraction may then be used for the determination of the isotacticity by NMR.

Maximum spinning speed was determined as follows: Starting from an initial spinning speed of 1500 m/min,

the speed was increased in increments of 50 m/min, each increase followed by a holding time of 5 min, until the onset of fiber breaks, which gives the maximum spinning speed. Reported values are the average of five experiments.

Fiber titers were measured on a Zweigle vibroscope S151/2 in accordance with norm ISO 1973:1995 at a temperature of 23°C.

Fiber tenacity and elongation were measured on a Lenzing Vibrodyn according to norm ISO 5079:1995 with a testing speed of 10 mm/min at a temperature of 23°C.

POLYPROPYLENES

Fibers were produced using polypropylenes PP1 and PP2, both having a melt flow index ($MFI_2$) of 25 dg/min, which was obtained by peroxide degradation from a first melt flow index $MFI_1$ to a second melt flow index $MFI_2$, with the degradation ratios $MFI_1/MFI_2$ as given in table 1. PP1 is a polypropylene in accordance with the present invention. PP2 is a comparative polypropylene. PP1 and PP2 were additivated with standard antioxidants and acid scavenger to reduce degradation during fiber spinning. Properties of PP1 and PP2 are given in table 1.

Table 1

| | | PP1 | PP2 Comp. ex. |
|---|---|---|---|
| Final MFI | dg/min | 24.7 | 25 |
| Degradation ratio $MFI_1/MFI_2$ | | 0.12 | 0.12 |
| Molecular weights (GPC) | | | |
| $M_n$ | kDa | 33 | 41 |
| $M_w$ | kDa | 184 | 169 |
| $M_z$ | kDa | 494 | 457 |
| MWD = $M_w/M_n$ | | 5.5 | 4.1 |
| Xylene solubles | wt% | 1.5 | 3.1 |
| Isotacticity | % mmmm | 98.4 | 97.1 |

FIBER SPINNING

Polypropylenes PP1 and PP2 were spun into fibers on a Busschaert fiber spinning pilot line, which is equipped with two circular dies of 112 holes each and a hole diameter of 0.5 mm. Melt temperature was kept at 250°C. Throughput per hole was kept constant at 0.5 g/hole/min. Spinning speed was 1700 m/min. Fiber properties are given in table 2.

Table 2

| | | PP1 | PP2 Comp. ex. |
|---|---|---|---|
| Maximum spinning speed | m/min | 2060 | 2440 |
| Fiber titer | dtex | 2.96 | 2.9 |
| Tenacity at $F_{max}$ | cN/tex | 19.1 | 22.0 |
| Elongation at break | % | 295 | 236 |

In comparison to PP2 polypropylene PP1 has a very low level of xylene solubles and a high isotacticity. Both of these characteristics indicate that PP1 is a very crystalline polypropylene and in consequence should disfavor elongational properties. It has therefore come as a complete surprise that the fibers made from PP1, i.e. according to the present invention, have superior elongation when compared to the fibers made from PP2.

**Claims**

1. Fibers comprising at least 98.0 wt% of a propylene polymer, said propylene polymer having melt flow index in the range from 5 dg/min to 2000 dg/min (measured according to ISO 1133 condition L, 2.16 kg, 230°C), a molecular weight distribution $M_w/M_n$ of at least 4.0 measured by Size Exclusion Chromatography and a xylene solubles content

of at most 3.0 wt% relative to the total weight of said propylene polymer measured as disclosed in the description, "Test methods" part, wherein the propylene polymer has a polydispersity index in the range from 5 to 7 as defined by (eq.1) disclosed in the description, wherein $G_c$ is obtained from dynamic rheology.

**2.** Fibers according to claim 1, wherein the propylene polymer has an isotacticity index of at least 97.0 % mmmm, determined by NMR.

**3.** Fibers according to any of the preceding claims, wherein the propylene polymer is **characterized by** a degradation ratio $MFI_1/MFI_2$, as defined in the description, "Examples" part, between the first melt flow index $MFI_1$ before degradation and the second melt flow index $MFI_2$ after degradation in the range from 0.02 to 0.90.

**4.** Fibers according to any of the preceding claims, wherein the propylene polymer has a total ash content of at most 50 ppm.

**5.** Fibers according to any of the preceding claims, wherein the propylene polymer has a melt flow index in the range from 20 dg/min to 300 dg/min (measured according to ISO 1133, condition L, 230°C, 2.16 kg).

**6.** Nonwovens comprising the fibers of claims 1 to 5.

**7.** Laminates and composites comprising the nonwovens of claim 6.

**8.** Process for the production of the fibers of claims 1 to 5 comprising the steps of

(a) polymerizing propylene and one or more optional comonomers in presence of a Ziegler-Natta polymerization catalyst to produce a propylene polymer,
(b) melting the propylene polymer obtained in step (a) in an extruder to obtain a molten propylene polymer, and
(c) extruding said molten propylene polymer from a number of fine, usually circular, capillaries of a spinneret to form fibers,

wherein the propylene polymer obtained in step (a) has a molecular weight distribution $M_w/M_n$ of at least 4.0 measured by Size Exclusion Chromatography and a xylene solubles content of at most 3.0 wt% relative to the total weight of said propylene polymer, measured as defined in the description, "Test methods" part, wherein the propylene polymer has a polydispersity index in the range from 5 to 7 as defined by (eq.1) disclosed in the description.

**9.** Process according to claim 8, wherein step (a) further comprises the step of

(a-1) chemically or thermally degrading the propylene polymer of step (a), which has a first melt flow index $MFI_1$, to a second melt flow index $MFI_2$.

**10.** Process according to claim 8 or claim 9, wherein the process further comprises the step of

(d) rapidly reducing the intermediate diameter of the fibers obtained in step (c) to a final diameter.

**11.** Process according to any of claims 8 to 10, wherein the process further comprises the steps of

(e) collecting the fibers obtained in step (c) or (d) on a support, and
(f) subsequently bonding the collected fibers to form a bonded nonwoven.

## Patentansprüche

**1.** Fasern, umfassend zumindest 98 Gew.-% eines Propylenpolymers, wobei das Propylenpolymer einen Schmelzflussindex im Bereich von 5 dg/min bis 2000 dg/min (gemessen gemäß ISO 1233, Bedingung L, 2,16 kg, 230 °C), eine Molekulargewichtsverteilung $M_w/M_n$ von zumindest 4,0, gemessen durch Größenauschlusschromatographie, und einen Gehalt an xylollöslichen Stoffen von höchstens 3,0 Gew.-% in Bezug auf das Gesamtgewicht des Propylenpolymers, gemessen wie in der Beschreibung im Teil "Test methods" offenbart, aufweist, wobei das Propylenpolymer einen Polydispersitätsindex im Bereich von 5 bis 7 aufweist, wie durch die in der Beschreibung offenbarte (Eq. 1) definiert, wobei $G_c$ mittels dynamischer Rheologie erhalten wird.

2. Fasern nach Anspruch 1, wobei das Propylenpolymer einen Isotaktizitätsindex von zumindest 97,0 % mmmm aufweist, ermittelt durch NMR.

3. Fasern nach einem der vorstehenden Ansprüche, wobei das Propylenpolymer wie in der Beschreibung im Teil "Examples" definiert durch ein Abbauverhältnis $MF_1/MF_2$ zwischen dem ersten Schmelzflussindex $MFI_1$ vor Abbau und dem Schmelzflussindex $MFI_2$ nach Abbau im Bereich von 0,02 bis 0,90 gekennzeichnet ist.

4. Fasern nach einem der vorstehenden Ansprüche, wobei das Propylenpolymer einen Gesamtaschegehalt von höchstens 50 ppm aufweist.

5. Fasern nach einem der vorstehenden Ansprüche, wobei das Propylenpolymer einen Schmelzflussindex im Bereich von 20 dg/min bis 300 dg/min aufweist (gemessen gemäß ISO 1133, Bedingung L, 230 °C, 2,16 kg).

6. Vliesstoffe, umfassend die Fasern nach Anspruch 1 bis 5.

7. Schichtstoffe und Verbundstoffe, umfassend die Vliesstoffe nach Anspruch 6.

8. Verfahren zum Herstellen der Fasern nach Anspruch 1 bis 5, umfassend die folgenden Schritte:

   (a) Polymerisieren von Propylen und einem oder mehreren optionalen Comonomeren in Gegenwart eines Ziegler-Natta-Polymerisationskatalysators, um ein Propylenpolymer herzustellen,
   (b) Schmelzen des in Schritt (a) erhaltenen Propylenpolymers in einem Extruder, um ein geschmolzenes Propylenpolymer zu erhalten, und
   (c) Extrudieren des geschmolzenen Propylenpolymers aus einer Reihe von feinen, für gewöhnlich kreisförmigen Kapillaren einer Spinndüse, um Fasen zu bilden,

   wobei das in Schritt (a) erhaltene Propylenpolymer eine Molekulargewichtsverteilung $M_w/M_n$ von zumindest 4,0, gemessen durch Größenauschlusschromatographie, und einen Gehalt an xylollöslichen Stoffen von höchstens 3,0 Gew.-% in Bezug auf das Gesamtgewicht des Propylenpolymers, gemessen wie in der Beschreibung im Teil "Test methods" offenbart, aufweist, wobei das Propylenpolymer einen Polydispersitätsindex im Bereich von 5 bis 7 aufweist, wie durch die in der Beschreibung offenbarte (Eq. 1) definiert.

9. Verfahren nach Anspruch 8, wobei Schritt (a) ferner den Schritt des

   (a-1) chemischen oder thermischen Abbauens des Propylenpolymers von Schritt (a), das einen ersten Schmelzflussindex $MFI_1$ aufweist, auf einen zweiten Schmelzflussindex $MFI_2$ umfasst.

10. Verfahren nach Anspruch 8 oder 9, wobei das Verfahren ferner den Schritt des

   (d) schnellen Reduzierens des Zwischendurchmessers der in Schritt (c) erhaltenen Fasern auf einen finalen Durchmesser umfasst.

11. Verfahren nach einem der Ansprüche 8 bis 10, wobei das Verfahren ferner die Schritte des

   (e) Sammelns der in Schritt (c) oder (d) erhaltenen Fasern auf einem Träger, und
   (f) nachfolgenden Bindens der gesammelten Fasern, um einen gebundenen Vliesstoff zu erhalten,

   umfasst.

## Revendications

1. Fibres comprenant au moins 98,0 % en poids d'un polymère de propylène, ledit polymère de propylène ayant un indice de fluage situé dans la plage allant de 5 dg/min à 2000 dg/min (mesuré conformément à la norme ISO 1133, condition L, 2,16 kg, 230°C), une distribution des masses moléculaires $M_w/M_n$, mesurée par chromatographie d'exclusion diffusion, d'au moins 4,0, et une teneur en composés solubles dans le xylène, mesurée comme indiqué dans la description, partie "Méthodes de test", d'au plus 3,0 % en poids par rapport au poids total dudit polymère de propylène, dans lesquelles le polymère de propylène a un indice de polydispersité, tel que défini par l'Equation

1 décrite dans la description, où $G_c$ est obtenu par rhéologie dynamique, situé dans la plage allant de 5 à 7.

**2.** Fibres selon la revendication 1, dans lesquelles le polymère de propylène a un indice d'isotacticité, déterminé par RMN, d'au moins 97,0 % mmmm.

**3.** Fibres selon l'une quelconque des revendications précédentes, dans lesquelles le polymère de propylène est **caractérisé par** un rapport de dégradation $MFI_1/MFI_2$, tel que défini dans la description, partie "Exemples", entre le premier indice de fluage $MFI_1$ avant dégradation et le deuxième indice de fluage $MFI_2$ après dégradation, situé dans la plage allant de 0,02 à 0,90.

**4.** Fibres selon l'une quelconque des revendications précédentes, dans lesquelles le polymère de propylène a une teneur totale en cendres d'au plus 50 ppm.

**5.** Fibres selon l'une quelconque des revendications précédentes, dans lesquelles le polymère de propylène a un indice de fluage situé dans la plage allant de 20 dg/min à 300 dg/min (mesuré conformément à la norme ISO 1133, condition L, 230°C, 2,16 kg).

**6.** Non-tissés comprenant les fibres des revendications 1 à 5.

**7.** Stratifiés et composites comprenant les non-tissés de la revendication 6.

**8.** Procédé pour la production des fibres des revendications 1 à 5, comprenant les étapes consistant à :

(a) polymériser du propylène et un ou plusieurs comonomères facultatifs en présence d'un catalyseur de polymérisation de Ziegler-Natta pour produire un polymère de propylène,
(b) fondre le polymère de propylène obtenu dans l'étape (a) dans une extrudeuse pour obtenir un polymère de propylène fondu, et
(c) extruder ledit polymère de propylène fondu à partir d'un certain nombre de capillaires fins, habituellement circulaires, d'une filière pour former des fibres,

dans lequel le polymère de propylène obtenu dans l'étape (a) a une distribution des masses moléculaires $M_w/M_n$, mesurée par chromatographie d'exclusion diffusion, d'au moins 4,0, et une teneur en composés solubles dans le xylène, mesurée comme indiqué dans la description, partie "Méthodes de test", d'au plus 3,0 % en poids par rapport au poids total dudit polymère de propylène, et dans lequel le polymère de propylène a un indice de polydispersité, tel que défini par l'Equation 1 décrite dans la description, situé dans la plage allant de 5 à 7.

**9.** Procédé selon la revendication 9, dans lequel l'étape (a) comprend en outre l'étape consistant à :

(a-1) dégrader chimiquement ou thermiquement le polymère de propylène de l'étape (a), qui a un premier indice de fluage $MFI_1$, jusqu'à un deuxième indice de fluage $MFI_2$.

**10.** Procédé selon la revendication 8 ou la revendication 9, lequel procédé comprend en outre l'étape consistant à :

(d) réduire rapidement le diamètre intermédiaire des fibres obtenues dans l'étape (c) jusqu'à un diamètre final.

**11.** Procédé selon l'une quelconque des revendications 8 à 10, lequel procédé comprend en outre les étapes consistant à :

(e) collecter les fibres obtenues dans l'étape (c) ou (d) sur un support, et
(f) ensuite coller les fibres collectées pour former un non-tissé lié.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0361493 A
- EP 0728769 A


### Non-patent literature cited in the description


- **G.J. RAY et al.** *Macromolecules,* 1977, vol. 10 (4), 773-778
- **ZEICHNER ; PATEL.** *Proceedings of the 2nd World Congress of Chemical Engineering, Montreal, Canada,* 1981, vol. 6, 373
- Plastics Additives Handbook. Hanser Publishers, 2001
- **F. FOURNÉ.** Synthetische Fasern. Carl Hanser Verlag, 1995
- **B.C. GOSWAMI et al.** Textile Yarns. John Wiley & Sons, 1977, 371-376